# EUROPÄISCHE PATENTSCHRIFT

(11) **EP 3 804 112 B1**
(45) Veröffentlichungstag und Bekanntmachung des Hinweises auf die Patenterteilung: **02.09.2026**
(21) Anmeldenummer: 18746600.8
(22) Anmeldetag: 09.07.2018
(51) Int. Cl.: H02M 7/217, H02M 7/48, H02M 7/797, H02M 1/32, H02M 7/483

(54) **MODULARER MULTILEVEL-STROMRICHTER MIT UNTERSCHIEDLICHEN SUBMODULTYPEN**
MODULAR MULTILEVEL POWER CONVERTER WITH DIFFERENT SUB-MODUL TYPES
CONVERTISSEUR DE PUISSANCE MODULAIRE À PLUSIEURS NIVEAUX AVEC DIFFÉRENTS TYPES DE SOUS-MODULE

(43) Veröffentlichungstag der Anmeldung: 14.04.2021
(73) Patentinhaber: Siemens Energy Global GmbH & Co. KG, 81739 München (DE)
(72) Erfinder: ERGIN, Dominik, 91083 Baiersdorf (DE); FRIESE, Arne, 91052 Erlangen (DE); KAMMERER, Felix, 91058 Erlangen (DE); SEMMLER, Sebastian, 90427 Nürnberg (DE)
(86) Internationale Anmeldenummer: PCT/EP2018/068511
(87) Internationale Veröffentlichungsnummer: WO 2020/011331

(56) Entgegenhaltungen:
- EP-A1- 2 608 344
- WO-A1-2012/103936
- WO-A1-2014/166129
- WO-A2-2012/072168
- CN-B- 103 050 955
- US-A1- 2015 229 234
- US-A1- 2017 054 294

## Beschreibung

Die Erfindung betrifft einen modularen Multilevel-Stromrichter, der für jede Wechselspannungsphase einer mehrphasigen Wechselspannung einen ersten Stromrichterzweig, der einen Wechselspannungsanschluss der Wechselspannungsphase mit einem ersten Gleichspannungsanschluss verbindet, und einen zweiten Stromrichterzweig, der den Wechselspannungsanschluss mit einem zweiten Gleichspannungsanschluss verbindet, aufweist, wobei jeder Stromrichterzweig mehrere in Reihe geschaltete Submodule zweier voneinander verschiedener Submodultypen aufweist.

Derartige Stromrichter werden insbesondere in Stromrichterstationen für eine so genannte Hochspannungs-Gleichstrom-Übertragung (HGÜ) verwendet, bei der elektrische Energie zwischen Wechselstromnetzen über eine Hochspannungs-Gleichstrom-Übertragungsstrecke (HGÜ-Strecke) mit hoher Gleichspannung übertragen wird. Um eine HGÜ-Strecke mit einem Wechselstromnetz zu verbinden, wird zwischen dem Wechselstromnetz und einem Ende der HGÜ-Strecke eine Stromrichterstation angeordnet, in der die Umwandlung zwischen Wechselstrom und -spannung des Wechselstromnetzes und Gleichstrom und -spannung der HGÜ erfolgt.

Jedes Submodul eines modularen Multilevel-Stromrichters weist in der Regel mehrere Halbleiterschalter, einen Kondensator und einen Bypass-Schalter auf. Durch den Bypass-Schalter wird das Submodul zu dessen Schutz überbrückt, wenn eine an dem Submodul anliegende Submodulspannung eine Submodulgrenzspannung überschreitet.

Die internationale Patentanmeldung WO 2012/103936 A1 offenbart einen mehrphasigen modularen Multilevel-Stromrichter, der in jedem Stromrichterzweig eine Modulgruppe mit Halbbrückenmodulen und eine Modulgruppe mit Vollbrückenmodulen aufweist.

Die Schrift CN 103 050 955 B offenbart, bei einem modularen Multilevel-Stromrichter in jedem Stromrichterzweig mehrere Modulgruppen vorzusehen, die jeweils Halbbrückenmodule aufweisen. Zu jeder Modulgruppe ist jeweils ein Varistor parallelgeschaltet.

Die internationale Patentanmeldung WO 2014/166129 A1 offenbart einen Stromrichter für eine Hochspannungsgleichstromübertragung. Auf der Hochspannungsgleichstromseite ist als Schutzschaltung eine Funkenstrecke installiert.

Die Schriften US 2015/0229234 Al und WO 2012/072168 A2 offenbaren jeweils ein Doppel-Halbbrückenmodul; die Schrift US 2017/054294 A1 offenbart ein Doppel-Vollbrückenmodul.

Aus der europäischen Patentanmeldung EP 2 608 344 A1 ist ein Modul bekannt, dessen Anschlüsse im Fehlerfall mittels eines Sicherheitsschalters kurzgeschlossen werden können. Dadurch wird eine Überbelastung des modulinternen Zwischenkreiskondensators vermieden.

In einem modularen Multilevel-Stromrichter kann es aufgrund von Fehlern, beispielsweise durch Isolationsversager, zur Überladung von Submodulen kommen. Zum Schutz des Stromrichters werden die Submodule beim Auftreten solcher Fehler blockiert, indem die Halbleiter geöffnet werden, und das Wechselstromnetz wird abgeschaltet.

Nachteilig ist dabei, dass in der Zeit vom Blockieren der Submodule bis zum Abschalten des Wechselstromnetzes die Differenz zwischen der Gleichspannung und der aufgeprägten Wechselspannung über den Stromrichterzweigen anliegt. Dies führt zu einem Aufladen der Kondensatoren der Submodule. Abhängig von der Höhe und Dauer der anliegenden

Spannungsdifferenz kann es zu einer Spannungsüberhöhung kommen, die mit einer Überschreitung der Submodulgrenzspannung bei einem oder mehreren Submodulen verbunden sein kann. Eine Überschreitung der Submodulgrenzspannung eines Submoduls aufgrund der Überladung führt zur Auslösung des Bypass-Schalters des Submoduls, das damit ausfällt, das heißt eine Überladung kann zum Ausfall mehrerer oder sogar aller Submodule eines Stromrichterzweigs führen.

Eine Möglichkeit, die Stromrichterzweige vor einer Überladung der Submodule und der damit verbundenen Gefahr der Auslösung von Bypass-Schaltern zu schützen, besteht darin, die Anzahl der Submodule in den Stromrichterzweigen soweit zu erhöhen, dass die Submodulgrenzspannungen der Submodule mit hoher Wahrscheinlichkeit nicht überschritten werden. Diese Lösung ist jedoch sehr aufwändig und kostspielig, erhöht die Verluste durch die zusätzlichen Submodule und vergrößert den Platzbedarf für die Submodule.

Der Erfindung liegt die Aufgabe zugrunde, einen modularen Multilevel-Stromrichter mit Submodulen zwei voneinander verschiedener Submodultypen vor einer Überladung der Submodule zu schützen.

Die Aufgabe wird erfindungsgemäß durch einen modularen Multilevel-Stromrichter mit den Merkmalen des Anspruchs 1 gelöst.

Vorteilhafte Ausgestaltungen der Erfindung sind Gegenstand der abhängigen Ansprüche.

Ein erfindungsgemäßer mehrphasiger modularer Multilevel-Stromrichter umfasst zwei Gleichspannungsanschlüsse und für jede Wechselspannungsphase einer mehrphasigen Wechselspannung einen Wechselspannungsanschluss, einen ersten Stromrichterzweig, der den Wechselspannungsanschluss mit einem ersten Gleichspannungsanschluss verbindet, und einen zweiten Stromrichterzweig, der den Wechselspannungsanschluss mit dem zweiten Gleichspannungsanschluss verbindet. Jeder Stromrichterzweig weist eine erste Modulgruppe mehrerer in Reihe geschalteter Submodule eines ersten Submodultyps mit jeweils mehreren Halbleiterschaltern und eine zu der ersten Modulgruppe in Reihe geschaltete zweite Modulgruppe mehrerer in Reihe geschalteter Submodule eines von dem ersten Submodultyp verschiedenen zweiten Submodultyps mit jeweils mehreren Halbleiterschaltern auf. Die beiden Modulgruppen jedes Stromrichterzweigs sind unabhängig voneinander durch überspannungsbegrenzende Schutzschaltungen gegen Überspannungen geschützt.

Ein erfindungsgemäßer modularer Multilevel-Stromrichter weist also Submodule zweier voneinander verschiedener Submodultypen auf. Dadurch können Vorteile verschiedener Submodultypen miteinander kombiniert werden. Beispielsweise können Halbbrückenmodule mit Vollbrückenmodulen oder anderen unten genannten Submodultypen kombiniert werden. Submodule verschiedener Submodultypen werden jedoch im Fall fehlerbedingter Überspannungen in der Regel nicht gleichmäßig geladen. Beispielsweise können Vollbrückenmodule im blockierten Zustand durch Überspannungen beider Spannungsrichtungen (beziehungsweise Spannungsvorzeichen) aufgeladen werden, während Halbbrückenmodule für eine Spannungsrichtung einen Freilaufpfad aufweisen und daher nur durch Überspannungen der anderen Spannungsrichtung aufgeladen werden können. Die Erfindung berücksichtigt dies, indem die Submodule jedes Submodultyps in jedem Stromrichterzweig zu einer Modulgruppe in Reihe geschaltet werden und die Modulgruppen durch voneinander unabhängige Schutzschaltungen gegen Überspannungen geschützt werden. Dadurch können die Schutzschaltungen den Submodultypen der Modulgruppen angepasst werden, so dass insbesondere keine zusätzlichen Submodule benötigt werden, um die Stromrichterzweige vor einer Überladung der Submodule zu schützen. Dies spart gegenüber einer Erhöhung der Anzahl der Submodule Aufwand, Kosten und Platzbedarf für die Ausführung des Stromrichters und verringert dessen Verluste.

Eine Ausgestaltung sieht vor, dass jede Modulgruppe durch eine zu der Modulgruppe parallel geschaltete Schutzschaltung gegen Überspannungen geschützt ist. Eine dazu alternative Ausgestaltung sieht erfindungsgemäß vor, dass die ersten Modulgruppen beider Stromrichterzweige jeder Wechselspannungsphase mit dem Wechselspannungsanschluss der Wechselspannungsphase verbunden sind und durch eine parallel zu den beiden ersten Modulgruppen geschaltete Schutzschaltung gegen Überspannungen geschützt sind und die zweite Modulgruppe jedes Stromrichterzweigs durch eine zu der zweiten Modulgruppe parallel geschaltete Schutzschaltung gegen Überspannungen geschützt ist. Die erste Alternative ermöglicht den Schutz jeder Modulgruppe durch eine separate, zu ihr parallel geschaltete Schutzschaltung. Die zweite Alternative ermöglicht einen Schutz zweier gleichartiger Modulgruppen eines Stromrichterzweigs durch eine gemeinsame, zu beiden Modulgruppen parallel geschaltete Schutzschaltung, wodurch gegenüber der ersten Alternative die Anzahl der Schutzschaltungen reduziert wird.

Eine weitere Ausgestaltung der Erfindung sieht vor, dass wenigstens eine Schutzschaltung einen Varistor oder eine Verschaltung mehrerer Varistoren aufweist. Beispielsweise ist wenigstens ein Varistor ein Metalloxid-Varistor. Alternativ oder zusätzlich weist wenigstens eine Schutzschaltung eine Funkenstrecke auf. Diese Ausgestaltungen der Erfindung sehen also vor, die Modulgruppen durch Varistoren, Funkenstrecken oder Kombinationen von Varistoren und Funkenstrecken gegen Überspannungen zu schützen. Durch geeignete Auslegung der Varistoren hinsichtlich der Spannungsabhängigkeit ihrer elektrischen Widerstände beziehungsweise der Funkenstrecken hinsichtlich ihrer Überschlagspannungen kann der Überspannungsschutz einer Schutzschaltung dabei der jeweils durch sie geschützten Modulgruppe angepasst werden.

Eine weitere Ausgestaltung der Erfindung sieht vor, dass die Submodule einer der beiden Modulgruppen jedes Stromrichterzweigs Halbbrückenmodule sind, die jeweils eine Halbbrücke, in deren Brückenarmen jeweils ein Halbleiterschalter angeordnet ist, und einen parallel zu der Halbbrücke geschalteten Kondensator aufweisen. Halbbrückenmodule eignen sich als Submodule eines modularen Multilevel-Stromrichters, da sie weniger Halbleiterschalter als andere Submodule (beispielsweise als Vollbrückenmodule) aufweisen und daher kostengünstiger sind und geringere Verluste verursachen.

Eine weitere Ausgestaltung der Erfindung sieht vor, dass die Submodule einer der beiden Modulgruppen jedes Stromrichterzweigs Vollbrückenmodule sind, die jeweils zwei zueinander parallel geschaltete Halbbrücken, in deren Brückenarmen jeweils ein Halbleiterschalter angeordnet ist, und einen parallel zu den beiden Halbbrücken geschalteten Kondensator aufweisen. Vollbrückenmodule ermöglichen im Unterschied zu Halbbrückenmodulen die Erzeugung von Spannungen unterschiedlichen Vorzeichens und erhöhen dadurch die Verwendungsmöglichkeiten des Stromrichters gegenüber der ausschließlichen Verwendung von Halbbrückenmodulen.

Eine weitere Ausgestaltung der Erfindung sieht vor, dass die Submodule einer der beiden Modulgruppen jedes Stromrichterzweigs Doppel-Halbbrückenmodule sind, die jeweils zwei Halbbrücken, in deren Brückenarmen jeweils ein Halbleiterschalter angeordnet ist, für jede Halbbrücke einen zu ihr parallel geschalteten Kondensator, eine erste Gleichrichterschaltung, die eine erste Elektrode eines ersten Kondensators mit einer ersten Elektrode des zweiten Kondensators verbindet, eine zweite Gleichrichterschaltung, die die zweite Elektrode des ersten Kondensators mit der zweiten Elektrode des zweiten Kondensators verbindet, und einen Kopplungs-Halbleiterschalter, der zwischen die erste Elektrode des ersten Kondensators und die zweite Elektrode des zweiten Kondensators geschaltet ist, aufweisen.

Eine weitere Ausgestaltung der Erfindung sieht vor, dass die Submodule einer der beiden Modulgruppen jedes Stromrichterzweigs Doppel-Halbbrückenmodule sind, die jeweils zwei Halbbrücken, in deren Brückenarmen jeweils ein Halbleiterschalter angeordnet ist, für jede Halbbrücke einen zu ihr parallel geschalteten Kondensator und zwei Kopplungs-Halbleiterschalter, die die beiden Kondensatoren kreuzweise miteinander verbinden, aufweisen.

Eine weitere Ausgestaltung der Erfindung sieht vor, dass die Submodule einer der beiden Modulgruppen jedes Stromrichterzweigs Doppel-Vollbrückenmodule sind, die jeweils zwei Halbbrücken, in deren Brückenarmen jeweils ein Halbleiterschalter angeordnet ist, für jede Halbbrücke einen zu ihr parallel geschalteten Kondensator und drei in Reihe geschaltete Kopplungs-Halbleiterschalter aufweisen, wobei ein erster Kopplungs-Halbleiterschalter und ein zweiter Kopplungs-Halbleiterschalter eine zu einem ersten Kondensator parallel geschaltete Reihenschaltung bilden und der zweite Kopplungs-Halbleiterschalter und der dritte Kopplungs-Halbleiterschalter eine zu dem zweiten Kondensator parallel geschaltete Reihenschaltung bilden.

Die in den vorgenannten Ausgestaltungen der Erfindung genannten Doppel-Halbbrückenmodule und Doppel-Vollbrückenmodule eignen sich insbesondere als Alternative zur Verwendung von Vollbrückenmodulen. Vorzugsweise weist ein erfindungsgemäßer Stromrichter eine Kombination von Halbbrückenmodulen mit Vollbrückenmodulen oder mit den vorgenannten Doppel-Halbbrückenmodulen oder Doppel-Vollbrückenmodulen auf.

Eine weitere Ausgestaltung der Erfindung sieht vor, dass jedes Submodul einen Bypass-Schalter aufweist, der das Submodul überbrückt, wenn eine an dem Submodul anliegende Submodulspannung eine Submodulgrenzspannung überschreitet, und jede Schutzschaltung eine Modulgruppenspannung, die an der von der Schutzschaltung geschützten Reihenschaltung von Submodulen anliegt, auf eine Modulgruppengrenzspannung begrenzt, die kleiner als die Summe der Submodulgrenzspannungen aller Submodule dieser Reihenschaltung ist. Diese Ausgestaltung der Erfindung verhindert das Auslösen der Bypass-Schalter der Submodule durch eine entsprechende modulgruppenspezifische Auslegung der Schutzschaltungen, die den Submodulgrenzspannungen angepasst ist, bei denen die Bypass-Schalter ausgelöst werden.

Insbesondere sieht die Erfindung eine Verwendung eines erfindungsgemäßen modularen Multilevel-Stromrichters in einer Stromrichterstation für eine Hochspannungs-GleichstromÜbertragung vor.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
FIG 1 einen schematischen Schaltplan eines ersten Ausführungsbeispiels eines modularen Multilevel-Stromrichters,
FIG 2 schematisch eine Modulgruppe eines modularen Multilevel-Stromrichters,
FIG 3 einen schematischen Schaltplan eines zweiten Ausführungsbeispiels eines modularen Multilevel-Stromrichters,
FIG 4 einen Schaltplan eines ersten Ausführungsbeispiels eines Submoduls eines modularen Multilevel-Stromrichters,
FIG 5 einen Schaltplan eines zweiten Ausführungsbeispiels eines Submoduls eines modularen Multilevel-Stromrichters,
FIG 6 einen Schaltplan eines dritten Ausführungsbeispiels eines Submoduls eines modularen Multilevel-Stromrichters,
FIG 7 einen Schaltplan eines vierten Ausführungsbeispiels eines Submoduls eines modularen Multilevel-Stromrichters,
FIG 8 einen Schaltplan eines fünften Ausführungsbeispiels eines Submoduls eines modularen Multilevel-Stromrichters.

Einander entsprechende Teile sind in den Figuren mit denselben Bezugszeichen versehen.

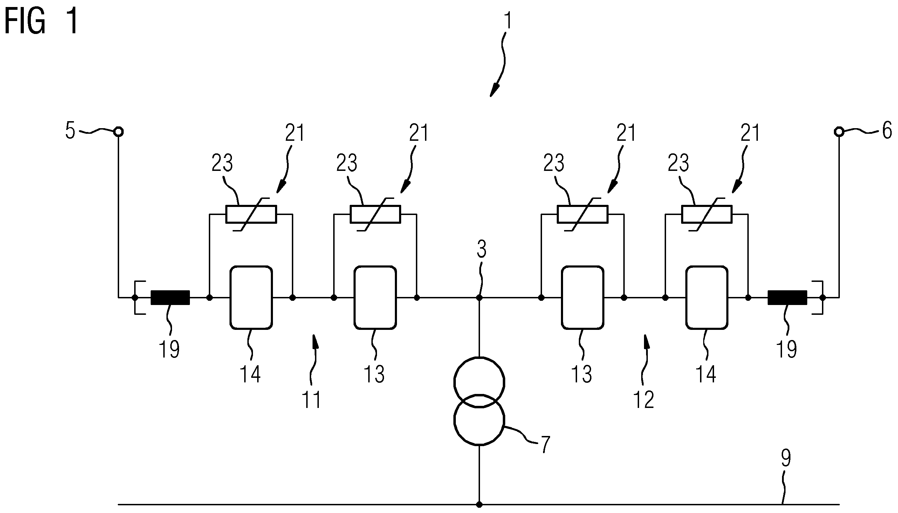

Figur 1 zeigt einen schematischen Schaltplan eines ersten Ausführungsbeispiels eines dreiphasigen modularen Multilevel-Stromrichters 1 in einer vereinfachten Darstellung als Einliniendiagramm, die nur eine Wechselspannungsphase berücksichtigt. Der Stromrichter 1 weist für jede Wechselspannungsphase einen Wechselspannungsanschluss 3 und zwei Gleichspannungsanschlüsse 5, 6 auf. Der Wechselspannungsanschluss 3 ist über eine Transformatoreinheit 7 mit einer Wechselspannungsphase eines dreiphasigen Wechselstromnetzes 9 verbunden.

Der Stromrichter 1 weist ferner für jede Wechselspannungsphase einen ersten Stromrichterzweig 11, der den Wechselspannungsanschluss 3 mit einem ersten Gleichspannungsanschluss 5 verbindet, und einen zweiten Stromrichterzweig 12, der den Wechselspannungsanschluss 3 mit dem zweiten Gleichspannungsanschluss 6 verbindet, auf. Jeder Stromrichterzweig 11, 12 weist eine erste Modulgruppe 13 mehrerer in Reihe geschalteter Submodule 15 eines ersten Submodultyps mit jeweils mehreren Halbleiterschaltern 17 und eine zu der ersten Modulgruppe 13 in Reihe geschaltete zweite Modulgruppe 14 mehrerer in Reihe geschalteter Submodule 15 eines von dem ersten Submodultyp verschiedenen zweiten Submodultyps mit jeweils mehreren Halbleiterschaltern 17 auf. Ferner weist jeder Stromrichterzweig 11, 12 eine in Reihe mit den Modulgruppen 13, 14 geschaltete Induktivität 19 auf.

Jede Modulgruppe 13, 14 ist durch eine Schutzschaltung 21 gegen Überspannungen geschützt, wobei jede Schutzschaltung 21 einen parallel zu der Modulgruppe 13, 14 geschalteten Varistor 23 aufweist. Dabei ist jede Schutzschaltung 21 in unten näher beschriebener Weise für die von ihr geschützte Modulgruppe 13, 14 ausgelegt, das heißt die Varistoren 23 für unterschiedliche Modulgruppen 13, 14 unterscheiden sich im allgemeinen voneinander hinsichtlich der Spannungsabhängigkeit ihrer elektrischen Widerstände. Die Varistoren 23 sind beispielsweise als Metalloxid-Varistoren ausgebildet.

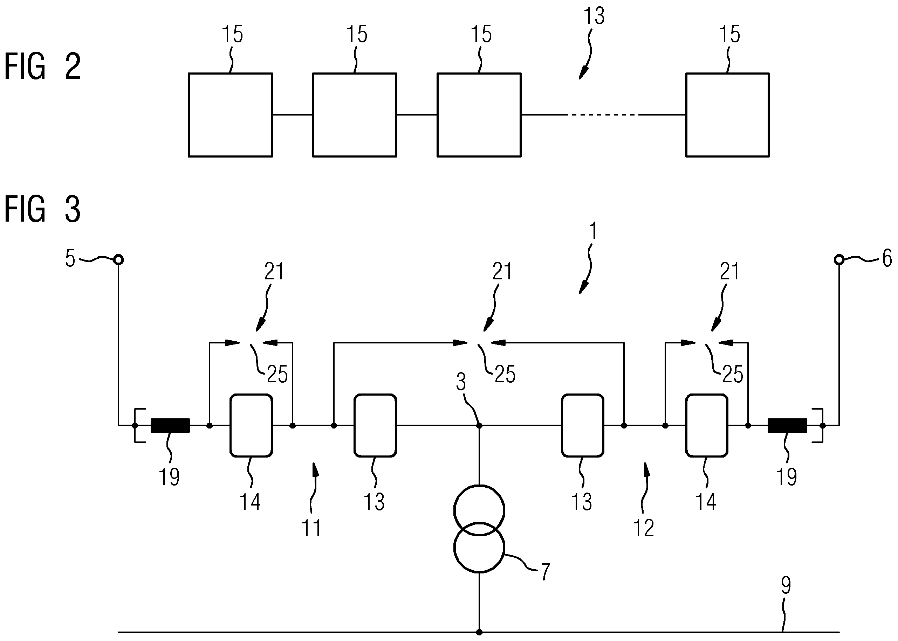

Figur 2 zeigt schematisch eine Modulgruppe 13. Jede Modulgruppe 13, 14 kann eine große Anzahl in Reihe geschalteter Submodule 15 aufweisen, beispielsweise einige hundert Submodule 15.

Figur 3 zeigt einen schematischen Schaltplan eines zweiten Ausführungsbeispiels eines dreiphasigen modularen Multilevel-Stromrichters 1. Dieses Ausführungsbeispiel unterscheidet sich von dem in Figur 1 gezeigten Ausführungsbeispiel nur hinsichtlich der Ausführung der Schutzschaltungen 21. Zum einen sind im Unterschied zu dem in Figur 1 gezeigten Ausführungsbeispiel die jeweils mit einem Wechselspannungsanschluss 3 verbundenen ersten Modulgruppen 13 beider Stromrichterzweige 11, 12 durch eine gemeinsame Schutzschaltung 21 geschützt, während jede zweite Modulgruppe 14 wie bei dem in Figur 1 gezeigten Ausführungsbeispiel jeweils separat durch eine Schutzschaltung 21 geschützt ist. Zum anderen weist jede Schutzschaltung 21 im Unterschied zu dem in Figur 1 gezeigten Ausführungsbeispiel statt eines Varistors 23 eine Funkenstrecke 25 auf. Analog zu dem in Figur 1 gezeigten Ausführungsbeispiel ist jede Schutzschaltung 21 für die von ihr jeweils geschützte Modulgruppe 14 beziehungsweise für die von ihr geschützten Modulgruppen 13 ausgelegt, das heißt eine Funkenstrecke 25 für eine zweite Modulgruppe 14 unterscheidet sich im allgemeinen von der Funkenstrecke 25 für die ersten Modulgruppen 13 hinsichtlich ihrer Überschlagspannung.

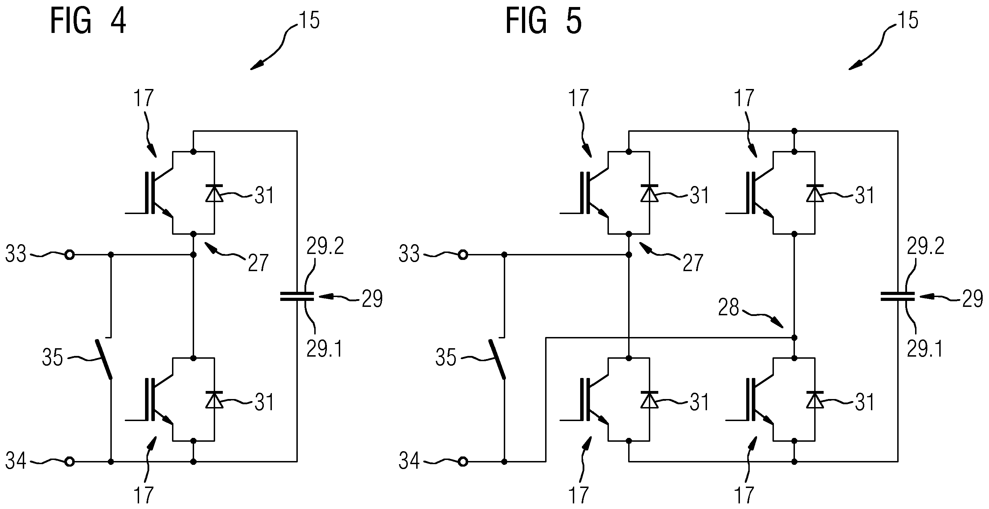

Die Figuren 4 bis 8 zeigen Schaltpläne von Submodulen 15 verschiedener Submodultypen, die als erster oder zweiter Submodultyp eines erfindungsgemäßen modularen Multilevel-Stromrichters 1 in Frage kommen.

Figur 4 zeigt ein als ein Halbbrückenmodul ausgebildetes Submodul 15. Dieses Submodul 15 weist eine Halbbrücke 27, in deren Brückenarmen jeweils ein Halbleiterschalter 17 angeordnet ist, und einen parallel zu der Halbbrücke 27 geschalteten Kondensator 29 auf. Das Submodul 15 weist ferner einen mit dem Brückenzweig der Halbbrücke 27 verbundenen ersten Submodulanschluss 33 und einen mit einer ersten Elektrode 29.1 des Kondensators 29 verbundenen zweiten Submodulanschluss 34 auf.

Figur 5 zeigt ein als ein Vollbrückenmodul ausgebildetes Submodul 15. Dieses Submodul 15 weist zwei zueinander parallel geschaltete Halbbrücken 27, 28, in deren Brückenarmen jeweils ein Halbleiterschalter 17 angeordnet ist, und einen parallel zu den beiden Halbbrücken 27 geschalteten Kondensator 29 auf. Das Submodul 15 weist ferner einen mit dem Brückenzweig einer ersten Halbbrücke 27 verbundenen ersten Submodulanschluss 33 und einen mit dem Brückenzweig der zweiten Halbbrücke 28 verbundenen zweiten Submodulanschluss 34 auf.

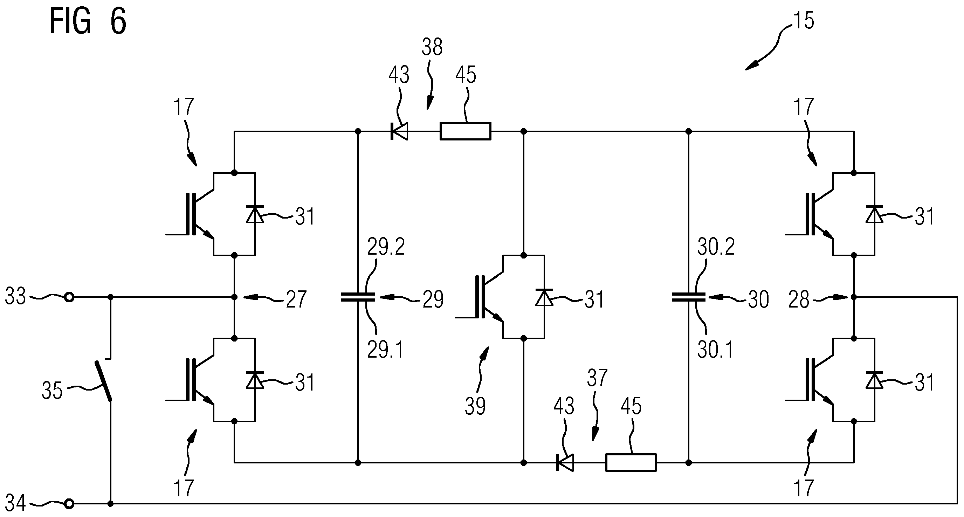

Figur 6 zeigt ein als ein Doppel-Halbbrückenmodul ausgebildetes Submodul 15. Dieses Submodul 15 weist zwei Halbbrücken 27, 28, in deren Brückenarmen jeweils ein Halbleiterschalter 17 angeordnet ist, zwei Kondensatoren 29, 30, zwei Gleichrichterschaltungen 37, 38 und einen Kopplungs-Halbleiterschalter 39 auf. Ein erster Kondensator 29 ist parallel zu einer ersten Halbbrücke 27 geschaltet. Der zweite Kondensator 30 ist parallel zu der zweiten Halbbrücke 28 geschaltet. Eine erste Gleichrichterschaltung 37 verbindet eine erste Elektrode 29.1 des ersten Kondensators 29 mit einer ersten Elektrode 30.1 des zweiten Kondensators 30. Die zweite Gleichrichterschaltung 38 verbindet die zweite Elektrode 29.2 des ersten Kondensators 29 mit der zweiten Elektrode 30.2 des zweiten Kondensators 30. Der Kopplungs-Halbleiterschalter 39 ist zwischen die erste Elektrode 29.1 des ersten Kondensators 29 und die zweite Elektrode 30.2 des zweiten Kondensators 30 geschaltet. Jede Gleichrichterschaltung 37, 38 ist als eine Reihenschaltung einer Gleichrichterdiode 43 und eines Widerstand 45 ausgebildet, wobei die Kathode der Gleichrichterdiode 43 der ersten Gleichrichterschaltung 37 mit der ersten Elektrode 29.1 des ersten Kondensators 29 verbunden ist und die Kathode der Gleichrichterdiode 43 der zweiten Gleichrichterschaltung 38 mit der zweiten Elektrode 29.2 des ersten Kondensators 29 verbunden ist. Das Submodul 15 weist ferner einen mit dem Brückenzweig der ersten Halbbrücke 27 verbundenen ersten Submodulanschluss 33 und einen mit dem Brückenzweig der zweiten Halbbrücke 28 verbundenen zweiten Submodulanschluss 34 auf.

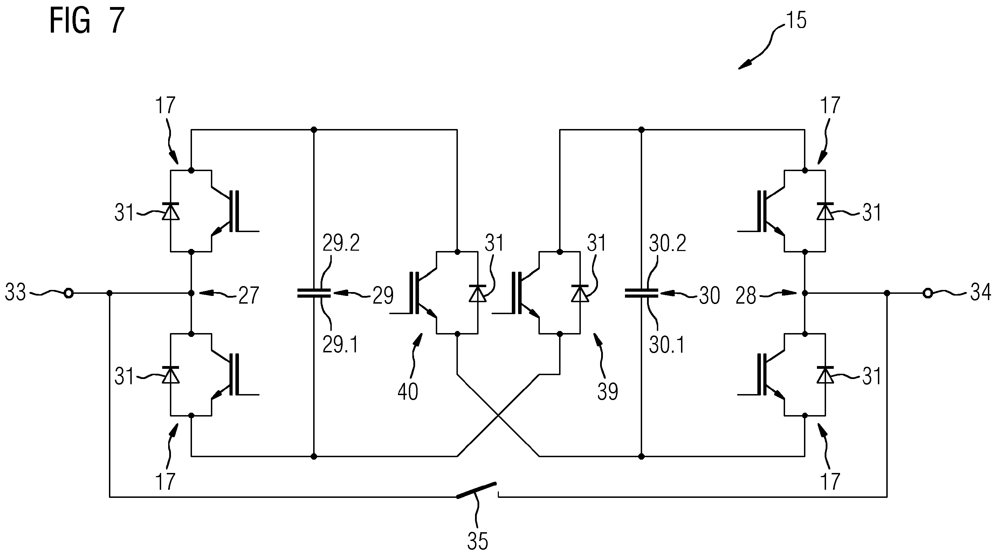

Figur 7 zeigt ein weiteres als ein Doppel-Halbbrückenmodul ausgebildetes Submodul 15. Dieses Submodul 15 weist zwei Halbbrücken 27, 28, in deren Brückenarmen jeweils ein Halbleiterschalter 17 angeordnet ist, zwei Kondensatoren 29, 30 und zwei Kopplungs-Halbleiterschalter 39, 40 auf. Ein erster Kondensator 29 ist parallel zu einer ersten Halbbrücke 27 geschaltet. Der zweite Kondensator 30 ist parallel zu der zweiten Halbbrücke 28 geschaltet. Ein erster Kopplungs-Halbleiterschalter 39 ist zwischen eine erste Elektrode 29.1 des ersten Kondensators 29 und eine zweite Elektrode 30.2 des zweiten Kondensators 30 geschaltet. Der zweite Kopplungs-Halbleiterschalter 40 ist zwischen die zweite Elektrode 29.2 des ersten Kondensators 29 und die erste Elektrode 30.1 des zweiten Kondensators 30 geschaltet.

Die Kopplungs-Halbleiterschalter 39, 40 verbinden die Kondensatoren 29, 30 somit kreuzweise miteinander. Das Submodul 15 weist ferner einen mit dem Brückenzweig der ersten Halbbrücke 27 verbundenen ersten Submodulanschluss 33 und einen mit dem Brückenzweig der zweiten Halbbrücke 28 verbundenen zweiten Submodulanschluss 34 auf.

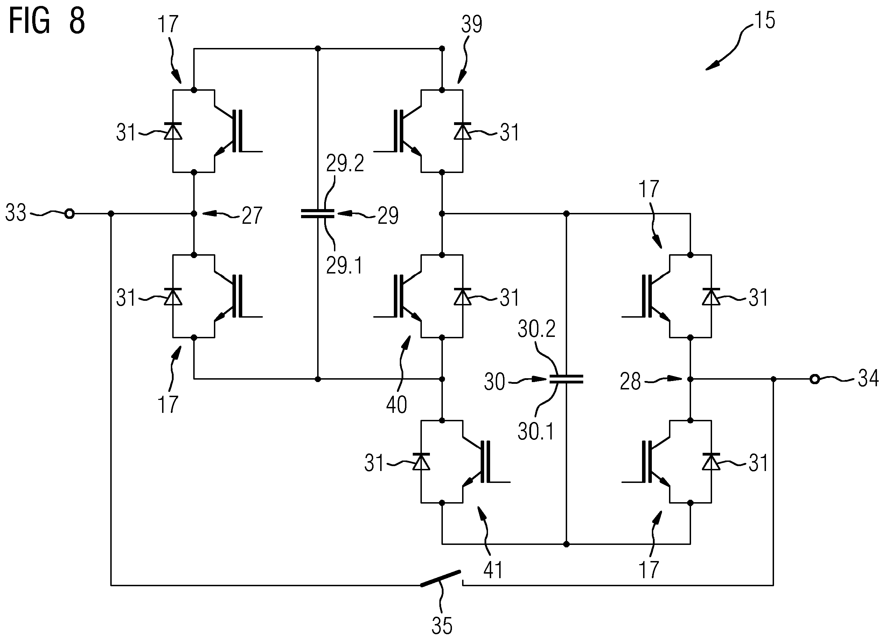

Figur 8 zeigt ein als ein Doppel-Vollbrückenmodul ausgebildetes Submodul 15. Dieses Submodul 15 weist zwei Halbbrücken 27, 28, in deren Brückenarmen jeweils ein Halbleiterschalter 17 angeordnet ist, zwei Kondensatoren 29, 30 und drei Kopplungs-Halbleiterschalter 39, 40, 41 auf. Ein erster Kondensator 29 ist parallel zu einer ersten Halbbrücke 27 geschaltet. Der zweite Kondensator 30 ist parallel zu der zweiten Halbbrücke 28 geschaltet. Ein erster Kopplungs-Halbleiterschalter 39 und ein zweiter Kopplungs-Halbleiterschalter 40 bilden eine zu dem ersten

Kondensator 29 parallel geschaltete Reihenschaltung. Der zweite Kopplungs-Halbleiterschalter 40 und der dritte Kopplungs-Halbleiterschalter 41 bilden eine zu dem zweiten Kondensator 30 parallel geschaltete Reihenschaltung. Der dritte Kopplungs-Halbleiterschalter 41 ist zwischen eine erste Elektrode 29.1 des ersten Kondensators 29 und eine erste Elektrode 30.1 des zweiten Kondensators 30 geschaltet. Der zweite Kopplungs-Halbleiterschalter 40 ist zwischen die erste Elektrode 29.1 des ersten Kondensators 29 und die zweite Elektrode 30.2 des zweiten Kondensators 30 geschaltet. Der erste Kopplungs-Halbleiterschalter 39 ist zwischen die zweite Elektrode 29.2 des ersten Kondensators 29 und die zweite Elektrode 30.2 des zweiten Kondensators 30 geschaltet. Die Halbleiterschalter 17 der ersten Halbbrücke 27, der erste Kopplungs-Halbleiterschalter 39 und der zweite Kopplungs-Halbleiterschalter 40 bilden somit eine Vollbrücke, deren Brückenzweig den ersten Kondensator 29 aufweist. Die Halbleiterschalter 17 der zweiten Halbbrücke 28, der zweite Kopplungs-Halbleiterschalter 40 und der dritte Kopplungs-Halbleiterschalter 41 bilden eine Vollbrücke, deren Brückenzweig den zweiten Kondensator 30 aufweist. Daher wird das in Figur 8 gezeigte Submodul 15 hier als ein Doppel-Vollbrückenmodul bezeichnet. Das Submodul 15 weist ferner einen mit dem Brückenzweig der ersten Halbbrücke 27 verbundenen ersten Submodulanschluss 33 und einen mit dem Brückenzweig der zweiten Halbbrücke 28 verbundenen zweiten Submodulanschluss 34 auf.

Bei jedem der in den Figuren 4 bis 8 gezeigten Submodule 15 ist ferner zwischen die beiden Submodulanschlüsse 33, 34 ein Bypass-Schalter 35 geschaltet. Durch den Bypass-Schalter 35 wird das Submodul 15 zu dessen Schutz durch Schließen des Bypass-Schalters 35 überbrückt, wenn eine zwischen den Submodulanschlüssen 33, 34 an dem Submodul 15 anliegende Submodulspannung eine Submodulgrenzspannung des jeweiligen Submoduls 15 überschreitet.

Die Halbleiterschalter 17 und die Kopplungs-Halbleiterschalter 39, 40, 41 sind bei allen in den Figuren 4 bis 8 gezeigten Submodulen 15 jeweils als ein Bipolartransistor mit isolierter Gate-Elektrode (IGBT = insulated-gate bipolar transistor) ausgebildet. Zu jedem Halbleiterschalter 17 und Kopplungs-Halbleiterschalter 39, 40, 41 ist dabei eine Freilaufdiode 31 antiparallel geschaltet.

Jede Halbbrücke 27, 28 ist ferner mit dem zu ihr parallel geschalteten Kondensator 29, 30 derart verschaltet, dass der Emitter eines Halbleiterschalters 17 der Halbbrücke 27, 28 mit der ersten Elektrode 29.1, 30.1 des Kondensators 29, 30 verbunden ist und der Kollektor des anderen IGBT Halbleiterschalters 17 der Halbbrücke 27, 28 mit der zweiten Elektrode 29.2, 30.2 des Kondensators 29, 30 verbunden ist.

Bei dem in Figur 6 gezeigten Submodul 15 ist der Emitter des Kopplungs-Halbleiterschalters 39 mit der ersten Elektrode 29.1 des ersten Kondensators 29 verbunden und der Kollektor ist mit der zweiten Elektrode 30.2 des zweiten Kondensators 30 verbunden.

Bei dem in Figur 7 gezeigten Submodul 15 ist der Emitter des ersten Kopplungs-Halbleiterschalters 39 mit der ersten Elektrode 29.1 des ersten Kondensators 29 verbunden, der Kollektor des ersten Kopplungs-Halbleiterschalters 39 ist mit der zweiten Elektrode 30.2 des zweiten Kondensators 30 verbunden, der Emitter des zweiten Kopplungs-Halbleiterschalters 40 ist mit der ersten Elektrode 30.1 des zweiten Kondensators 30 verbunden und der Kollektor des zweiten Kopplungs-Halbleiterschalters 40 ist mit der zweiten Elektrode 29.2 des ersten Kondensators 29 verbunden.

Bei dem in Figur 8 gezeigten Submodul 15 ist der Emitter des ersten Kopplungs-Halbleiterschalters 39 mit der zweiten Elektrode 30.2 des zweiten Kondensators 30 verbunden, der Kollektor des ersten Kopplungs-Halbleiterschalters 39 ist mit der zweiten Elektrode 29.2 des ersten Kondensators 29 verbunden, der Emitter des zweiten Kopplungs-Halbleiterschalters 40 ist mit der ersten Elektrode 29.1 des ersten Kondensators 29 verbunden, der Kollektor des zweiten Kopplungs-Halbleiterschalters 40 ist mit der zweiten Elektrode 30.2 des zweiten Kondensators 30 verbunden, der Emitter des dritten Kopplungs-Halbleiterschalters 41 ist mit der ersten Elektrode 30.1 des zweiten Kondensators 30 verbunden und der Kollektor des dritten Kopplungs-Halbleiterschalters 41 ist mit der ersten Elektrode 29.1 des ersten Kondensators 29 verbunden.

Bei den in den Figuren 1 und 3 gezeigten Ausführungsbeispielen eines modularen Multilevel-Stromrichters 1 ist beispielsweise eine der beiden Modulgruppen 13, 14 jedes Stromrichterzweigs 11, 12 als eine Reihenschaltung von in Figur 4 gezeigten Submodulen 15 ausgebildet. Die andere Modulgruppe 13, 14 jedes Stromrichterzweigs 11, 12 ist entweder als eine Reihenschaltung von in Figur 5 gezeigten Submodulen 15 oder als eine Reihenschaltung von in Figur 6 gezeigten Submodulen 15 oder als eine Reihenschaltung von in Figur 7 gezeigten Submodulen 15 oder als eine Reihenschaltung von in Figur 8 gezeigten Submodulen 15 ausgebildet.

Jede Schutzschaltung 21 begrenzt eine Modulgruppenspannung, die an der von der Schutzschaltung 21 geschützten Reihenschaltung von Submodulen 15 anliegt, auf eine Modulgruppengrenzspannung, die kleiner als die Summe der Submodulgrenzspannungen aller Submodule 15 dieser Reihenschaltung ist.

Die anhand der Figuren beschriebenen Ausführungsbeispiele können auf verschiedene Weise zu weiteren Ausführungsbeispielen modifiziert werden. Beispielsweise kann wenigstens eine Schutzschaltung 21 eine Reihenschaltung oder/und Parallelschaltung von Varistoren 23 oder/und von wenigstens einem Varistor 23 und einer Funkenstrecke 25 aufweisen.

### Bezugszeichenliste

- 1: modularer Multilevel-Stromrichter
- 3: Wechselspannungsanschluss
- 5, 6: Gleichspannungsanschluss
- 7: Transformatoreinheit
- 9: Wechselstromnetz
- 11, 12: Stromrichterzweig
- 13, 14: Modulgruppe
- 15: Submodul
- 17: Halbleiterschalter
- 19: Induktivität
- 21: Schutzschaltung
- 23: Varistor
- 25: Funkenstrecke
- 27, 28: Halbbrücke
- 29, 30: Kondensator
- 29.1, 29.2, 30.1, 30.2: Elektrode
- 31: Freilaufdiode
- 33, 34: Submodulanschluss
- 35: Bypass-Schalter
- 37, 38: Gleichrichterschaltung
- 39, 40, 41: Kopplungs-Halbleiterschalter
- 43: Gleichrichterdiode
- 45: Widerstand

## Patentansprüche

1. Mehrphasiger modularer Multilevel-Stromrichter (1), umfassend
- zwei Gleichspannungsanschlüsse (5, 6) und
- für jede Wechselspannungsphase einer mehrphasigen Wechselspannung einen Wechselspannungsanschluss (3), einen ersten Stromrichterzweig (11), der den Wechselspannungsanschluss (3) mit einem ersten Gleichspannungsanschluss (5) verbindet, und einen zweiten Stromrichterzweig (12), der den Wechselspannungsanschluss (3) mit dem zweiten Gleichspannungsanschluss (6) verbindet, wobei
- jeder Stromrichterzweig (11, 12) eine erste Modulgruppe (13) mehrerer in Reihe geschalteter Submodule (15) eines ersten Submodultyps mit jeweils mehreren Halbleiterschaltern (17) und eine zu der ersten Modulgruppe (13) in Reihe geschaltete zweite Modulgruppe (14) mehrerer in Reihe geschalteter Submodule (15) eines von dem ersten Submodultyp verschiedenen zweiten Submodultyps mit jeweils mehreren Halbleiterschaltern (17) aufweist,
**gekennzeichnet dadurch, dass**
- die beiden Modulgruppen (13, 14) jedes
Stromrichterzweigs (11, 12) unabhängig voneinander durch überspannungsbegrenzende Schutzschaltungen (21) gegen Überspannungen geschützt sind, wobei die ersten Modulgruppen (13) beider Stromrichterzweige (11, 12) jeder Wechselspannungsphase mit dem Wechselspannungsanschluss (3) der Wechselspannungsphase verbunden sind und durch eine parallel zu den beiden ersten Modulgruppen (13) geschaltete Schutzschaltung (21) gegen Überspannungen geschützt sind und die zweite Modulgruppe (14) jedes Stromrichterzweigs (11, 12) durch eine zu der zweiten Modulgruppe (14) parallel geschaltete Schutzschaltung (21) gegen Überspannungen geschützt ist.

2. Stromrichter (1) nach Anspruch 1, wobei wenigstens eine Schutzschaltung (21) einen Varistor (23) oder eine Verschaltung mehrerer Varistoren (23) aufweist.

3. Stromrichter (1) nach Anspruch 2, wobei wenigstens ein Varistor (23) ein Metalloxid-Varistor ist.

4. Stromrichter (1) nach einem der vorhergehenden Ansprüche, wobei wenigstens eine Schutzschaltung (21) eine Funkenstrecke (25) aufweist.

5. Stromrichter (1) nach einem der vorhergehenden Ansprüche, wobei die Submodule (15) einer der beiden Modulgruppen (13, 14) jedes Stromrichterzweigs (11, 12) Halbbrückenmodule sind, die jeweils eine Halbbrücke (27), in deren Brückenarmen jeweils ein Halbleiterschalter (17) angeordnet ist, und einen parallel zu der Halbbrücke (27) geschalteten Kondensator (29) aufweisen.

6. Stromrichter (1) nach Anspruch 5, wobei die Submodule (15) der anderen der beiden Modulgruppen (13, 14) jedes Stromrichterzweigs (11, 12) Vollbrückenmodule sind, die jeweils zwei zueinander parallel geschaltete Halbbrücken (27, 28), in deren Brückenarmen jeweils ein
Halbleiterschalter (17) angeordnet ist, und einen parallel zu den beiden Halbbrücken (27, 28) geschalteten Kondensator (29) aufweisen.

7. Stromrichter (1) nach Anspruch 5, wobei die Submodule (15) der anderen der beiden Modulgruppen (13, 14) jedes Stromrichterzweigs (11, 12) Doppel-Halbbrückenmodule sind, die jeweils zwei Halbbrücken (27, 28), in deren Brückenarmen jeweils ein Halbleiterschalter (17) angeordnet ist, für jede Halbbrücke (27, 28) einen zu ihr parallel geschalteten Kondensator (29, 30), eine erste Gleichrichterschaltung (37), die eine erste Elektrode (29.1) eines ersten
Kondensators (29) mit einer ersten Elektrode (30.1) des zweiten Kondensators (30) verbindet, eine zweite Gleichrichterschaltung (38), die die zweite Elektrode (29.2) des ersten Kondensators (29) mit der zweiten Elektrode (30.2) des zweiten Kondensators (30) verbindet, und einen Kopplungs-Halbleiterschalter (39), der zwischen die erste Elektrode (29.1) des ersten Kondensators (29) und die zweite Elektrode (30.2) des zweiten Kondensators (30) geschaltet ist, aufweisen.

8. Stromrichter (1) nach Anspruch 5, wobei die Submodule (15) der anderen der beiden Modulgruppen (13, 14) jedes Stromrichterzweigs (11, 12) Doppel-Halbbrückenmodule sind, die jeweils zwei Halbbrücken (27, 28), in deren Brückenarmen jeweils ein Halbleiterschalter (17) angeordnet ist, für jede Halbbrücke (27, 28) einen zu ihr parallel geschalteten Kondensator (29, 30) und zwei Kopplungs-Halbleiterschalter (39, 40), die die beiden Kondensatoren (29, 30) kreuzweise miteinander verbinden, aufweisen, wobei der erste Kopplungs-Halbleiterschalter (39) zwischen eine erste Elektrode (29.1) des ersten Kondensators (29) und eine zweite Elektrode (30.2) des zweiten Kondensators (30) geschaltet ist und der zweite Kopplungs-Halbleiterschalter (40) zwischen eine zweite Elektrode (29.2) des ersten Kondensators (29) und eine erste Elektrode (30.1) des zweiten Kondensators (30) geschaltet ist.

9. Stromrichter (1) nach Anspruch 5, wobei die Submodule (15) der anderen der beiden Modulgruppen (13, 14) jedes Stromrichterzweigs (11, 12) Doppel-Vollbrückenmodule sind, die jeweils zwei Halbbrücken (27, 28), in deren Brückenarmen jeweils ein Halbleiterschalter (17) angeordnet ist, für jede Halbbrücke (27, 28) einen zu ihr parallel geschalteten Kondensator (29, 30) und drei in Reihe geschaltete Kopplungs-Halbleiterschalter (39, 40, 41) aufweisen, wobei ein erster Kopplungs-Halbleiterschalter (39) und ein zweiter Kopplungs-Halbleiterschalter (40) eine zu einem ersten Kondensator (29) parallel geschaltete Reihenschaltung bilden und der zweite Kopplungs-Halbleiterschalter (40) und der dritte Kopplungs-Halbleiterschalter (41) eine zu dem zweiten Kondensator (30) parallel geschaltete Reihenschaltung bilden.

10. Stromrichter (1) nach einem der vorhergehenden Ansprüche, wobei jedes Submodul (15) einen Bypass-Schalter (35) aufweist, der das Submodul (15) überbrückt, wenn eine an dem Submodul (15) anliegende Submodulspannung eine Submodulgrenzspannung überschreitet, und jede Schutzschaltung (21) eine Modulgruppenspannung, die an der von der Schutzschaltung (21) geschützten Reihenschaltung von Submodulen (15) anliegt, auf eine Modulgruppengrenzspannung begrenzt, die kleiner als die Summe der Submodulgrenzspannungen aller Submodule (15) dieser Reihenschaltung ist.

11. Verwendung eines gemäß einem der vorhergehenden Ansprüche ausgebildeten modularen Multilevel-Stromrichters (1) in einer Stromrichterstation für eine Hochspannungs-GleichstromÜbertragung.

## Claims

1. A multiphase modular multilevel power converter (1) comprising
- two DC voltage terminals (5, 6), and
- for each AC voltage phase of a multiphase AC voltage, an AC voltage terminal (3), a first power converter branch (11) connecting the AC voltage terminal (3) to a first DC voltage terminal (5), and a second power converter branch (12) connecting the AC voltage terminal (3) to the second DC voltage terminal (6), wherein
- each power converter branch (11, 12) has a first module group (13) of a plurality of submodules (15) connected in series of a first sub-module type, each with a plurality of semiconductor switches (17), and a second module group (14) connected in series to the first module group (13) of a plurality of sub-modules (15) connected in series of a second sub-module type different from the first sub-module type, each with a plurality of semiconductor switches (17), **characterized in that**
- the two module groups (13, 14) of each power converter branch (11, 12) are protected against surge voltages independently of one another by surge voltage-limiting protective circuits (21), wherein the first module groups (13) of both power converter branches (11, 12) of each AC voltage phase are connected to the AC voltage terminal (3) of the AC voltage phase and are protected against surge voltages by a protective circuit (21) connected in parallel to the two first module groups (13), and the second module group (14) of each power converter branch (11, 12) is protected against surge voltages by a protective circuit (21) connected in parallel to the second module group (14).

2. The power converter (1) according to claim 1, wherein at least one protective circuit (21) has a varistor (23) or a plurality of interconnected varistors (23).

3. The power converter (1) according to claim 2, wherein at least one varistor (23) is a metal oxide varistor.

4. The power converter (1) according to any one of the preceding claims, wherein at least one protective circuit (21) has a spark gap (25).

5. The power converter (1) according to any one of the preceding claims, wherein the sub-modules (15) of one of the two module groups (13, 14) of each power converter branch (11, 12) are half-bridge modules, each having a half-bridge (27), in the bridge arms of which a respective semiconductor switch (17) is arranged, and a capacitor (29) connected in parallel to the half-bridge (27).

6. The power converter (1) according to claim 5, wherein the sub-modules (15) of the other of the two module groups (13, 14) of each power converter branch (11, 12) are full-bridge modules, each having two half-bridges (27, 28) connected in parallel to one another, in the bridge arms of which a respective semiconductor switch (17) is arranged, and a capacitor (29) connected in parallel to the two half-bridges (27, 28).

7. The power converter (1) according to claim 5, wherein the sub-modules (15) of the other of the two module groups (13, 14) of each power converter branch (11, 12) are dual half-bridge modules, each having two half-bridges (27, 28), in the bridge arms of which a respective semiconductor switch (17) is arranged, a capacitor (29, 30) for each half-bridge (27, 28) connected in parallel thereto, a first rectifier circuit (37) connecting a first electrode (29.1) of a first capacitor (29) to a first electrode (30.1) of the second capacitor (30), a second rectifier circuit (38) connecting the second electrode (29.2) of the first capacitor (29) to the second electrode (30.2) of the second capacitor (30), and a coupling semiconductor switch (39) connected between the first electrode (29.1) of the first capacitor (29) and the second electrode (30.2) of the second capacitor (30).

8. The power converter (1) according to claim 5, wherein the sub-modules (15) of the other of the two module groups (13, 14) of each power converter branch (11, 12) are dual half-bridge modules, each having two half-bridges (27, 28), in the bridge arms of which a respective semiconductor switch (17) is arranged, a capacitor (29, 30) for each half-bridge (27, 28) connected in parallel thereto, and two coupling semiconductor switches (39, 40) connecting the two capacitors (29, 30) crosswise to one another, wherein the first coupling semiconductor switch (39) is connected between a first electrode (29.1) of the first capacitor (29) and a second electrode (30.2) of the second capacitor (30), and the second coupling semiconductor switch (40) is connected between a second electrode (29.2) of the first capacitor (29) and a first electrode (30.1) of the second capacitor (30).

9. The power converter (1) according to claim 5, wherein the sub-modules (15) of the other of the two module groups (13, 14) of each power converter branch (11, 12) are dual full-bridge modules, each having two half-bridges (27, 28), in the bridge arms of which a respective semiconductor switch (17) is arranged, a capacitor (29, 30) for each half bridge (27, 28) connected in parallel thereto, and three coupling semiconductor switches (39, 40, 41) connected in series, wherein a first coupling semiconductor switch (39) and a second coupling semiconductor switch (40) form a series circuit connected in parallel to a first capacitor (29), and the second coupling semiconductor switch (40) and the third coupling semiconductor switch (41) form a series circuit connected in parallel to the second capacitor (30).

10. The power converter (1) according to any one of the preceding claims, wherein each sub-module (15) has a bypass switch (35) bypassing the sub-module (15) when a sub-module voltage applied to the sub-module (15) exceeds a sub-module limit voltage, and each protective circuit (21) limits a module group voltage applied to the series circuit of sub-modules (15) protected by the protective circuit (21) to a module group limit voltage which is smaller than the sum of the sub-module limit voltages of all sub-modules (15) of this series circuit.

11. A use of a modular multilevel power converter (1) designed according to any one of the preceding claims in a power converter station for high-voltage direct current transmission.

## Revendications

1. Convertisseur modulaire multiniveau polyphasé (1), comprenant
- deux bornes de tension continue (5, 6) et
- pour chaque phase de tension alternative d'une tension alternative polyphasée, une borne de tension alternative (3), une première branche de convertisseur (11) qui relie la borne de tension alternative (3) à une première borne de tension continue (5), et une deuxième branche de convertisseur (12) qui relie la borne de tension alternative (3) à la deuxième borne de tension continue (6), dans lequel
- chaque branche de convertisseur (11, 12) comporte un premier groupe de modules (13) de plusieurs sous-modules (15) connectés en série d'un premier type de sous-module ayant chacun plusieurs commutateurs à semi-conducteur (17), et un deuxième groupe de modules (14), connecté en série avec le premier groupe de modules (13), de plusieurs sous-modules (15) connectés en série d'un deuxième type de sous-module différent du premier type de sous-module ayant chacun plusieurs commutateurs à semi-conducteur (17), **caractérisé en ce que**
- les deux groupes de modules (13, 14) de chaque branche de convertisseur (11, 12) sont protégés contre les surtensions, indépendamment les uns des autres, par des circuits de protection de limitation de surtension (21), dans lequel les premiers groupes de modules (13) des deux branches de convertisseur (11, 12) de chaque phase de tension alternative sont connectés à la borne de tension alternative (3) de la phase de tension alternative et sont protégés contre les surtensions par un circuit de protection (21) connecté en parallèle aux deux premiers groupes de modules (13), et le deuxième groupe de modules (14) de chaque branche de convertisseur (11, 12) est protégé contre les surtensions par un circuit de protection (21) connecté en parallèle au deuxième groupe de modules (14).

2. Convertisseur (1) selon la revendication 1, dans lequel au moins un circuit de protection (21) comporte une varistance (23) ou un circuit d'interconnexion de plusieurs varistances (23).

3. Convertisseur (1) selon la revendication 2, dans lequel au moins une varistance (23) est une varistance à oxyde métallique.

4. Convertisseur (1) selon l'une des revendications précédentes, dans lequel au moins un circuit de protection (21) comporte un éclateur (25).

5. Convertisseur (1) selon l'une des revendications précédentes, dans lequel les sous-modules (15) de l'un des deux groupes de modules (13, 14) de chaque branche de convertisseur (11, 12) sont des modules en demi-pont qui comportent chacun un demi-pont (27), dans les bras de pont de chacun desquels est disposé un commutateur à semi-conducteur (17), et un condensateur (29) connecté en parallèle au demi-pont (27).

6. Convertisseur (1) selon la revendication 5, dans lequel les sous-modules (15) de l'autre des deux groupes de modules (13, 14) de chaque branche de convertisseur (11, 12) sont des modules en pont complet qui comportent chacun deux demi-ponts (27, 28) connectés en parallèle l'un à l'autre, dans les bras de pont de chacun desquels est disposé un commutateur à semi-conducteur (17), et un condensateur (29) connecté en parallèle aux deux demi-ponts (27, 28).

7. Convertisseur (1) selon la revendication 5, dans lequel les sous-modules (15) de l'autre des deux groupes de modules (13, 14) de chaque branche de convertisseur (11, 12) sont des modules en double demi-pont qui comportent chacun deux demi-ponts (27, 28), dans les bras de pont de chacun desquels est disposé un commutateur à semi-conducteur (17), pour chaque demi-pont (27, 28) un condensateur (29, 30) connecté en parallèle à celui-ci, un premier circuit redresseur (37) qui relie une première électrode (29.1) d'un premier condensateur (29) à une première électrode (30.1) du deuxième condensateur (30), un deuxième circuit redresseur (38) qui relie la deuxième électrode (29.2) du premier condensateur (29) à la deuxième électrode (30.2) du deuxième condensateur (30), et un commutateur à semi-conducteur de couplage (39) qui est connecté entre la première électrode (29.1) du premier condensateur (29) et la deuxième électrode (30.2) du deuxième condensateur (30).

8. Convertisseur (1) selon la revendication 5, dans lequel les sous-modules (15) de l'autre des deux groupes de modules (13, 14) de chaque branche de convertisseur (11, 12) sont des modules en double demi-pont qui comportent chacun deux demi-ponts (27, 28), dans les bras de pont de chacun desquels est disposé un commutateur à semi-conducteur (17), pour chaque demi-pont (27, 28) un condensateur (29, 30) connecté en parallèle à celui-ci, et deux commutateurs à semi-conducteur de couplage (39, 40) qui interconnectent de manière croisée les deux condensateurs (29, 30) entre eux, dans lequel le premier commutateur à semi-conducteur de couplage (39) est connecté entre une première électrode (29.1) du premier condensateur (29) et une deuxième électrode (30.2) du deuxième condensateur (30), et le deuxième commutateur à semi-conducteur de couplage (40) est connecté entre une deuxième électrode (29.2) du premier condensateur (29) et une première électrode (30.1) du deuxième condensateur (30).

9. Convertisseur (1) selon la revendication 5, dans lequel les sous-modules (15) de l'autre des deux groupes de modules (13, 14) de chaque branche de convertisseur (11, 12) sont des modules en double pont complet qui comportent chacun deux demi-ponts (27, 28), dans les bras de pont de chacun desquels est disposé un commutateur à semi-conducteur (17), pour chaque demi-pont (27, 28) un condensateur (29, 30) connecté en parallèle à celui-ci, et trois commutateurs à semi-conducteur de couplage (39, 40, 41) connectés en série, dans lequel un premier commutateur à semi-conducteur de couplage (39) et un deuxième commutateur à semi-conducteur de couplage (40) forment un circuit série connecté en parallèle à un premier condensateur (29), et le deuxième commutateur à semi-conducteur de couplage (40) et le troisième commutateur à semi-conducteur de couplage (41) forment un circuit série connecté en parallèle au deuxième condensateur (30).

10. Convertisseur (1) selon l'une des revendications précédentes, dans lequel chaque sous-module (15) comporte un commutateur de dérivation (35) qui court-circuite le sous-module (15) lorsqu'une tension de sous-module appliquée au sous-module (15) dépasse une tension limite de sous-module, et chaque circuit de protection (21) limite une tension de groupe de modules, qui est appliquée au circuit série de sous-modules (15) protégé par le circuit de protection (21), à une tension limite de groupe de modules qui est inférieure à la somme des tensions limites de sous-module de tous les sous-modules (15) de ce circuit série.

11. Utilisation d'un convertisseur modulaire multiniveau (1) configuré selon l'une des revendications précédentes dans une station de conversion pour une transmission en courant continu haute tension.
